# EUROPEAN PATENT APPLICATION

(11) **EP 4 012 311 A1**
(43) Date of publication of application: **15.06.2022**
(21) Application number: 20020601.9
(22) Date of filing: 10.12.2020
(51) Int. Cl.: F27B 3/08, F27B 3/20, F27D 11/08, F27D 11/10, H05B 7/12, H05B 7/14

(54) **ELECTRODE FOR AN ELECTRIC ARC FURNACE**

(71) Applicant: Linde GmbH, 82049 Pullach (DE)
(72) Inventor: Kwaschny, Pascal, 22767 Hamburg (DE)
(74) Representative: Gellner, Bernd

(57) **Abstract**

The present invention relates to an electrode (111) for generating an electric arc (103), said electrode (111) having a longitudinal bore (112) inside the electrode body for supplying an argon-rich gas through the bore (112), wherein the inner surface of the bore is sealed and/or coated and/or fitted with an inside tube, and it further relates to a method of manufacturing such electrodes (111).

## Description

The present invention relates to an electrode for generating an electric arc, said electrode being configured to be used in an electric arc furnace. Furthermore, the invention relates to an electrode assembly/unit comprising one or more of such electrodes and to a method of manufacturing such an electrode.

### Background of the invention

Electric arc furnaces are used in metallurgy for processing, particularly melting of metallic material like metal scrap or direct reduced iron (DRI, also referred to as sponge iron). An electrode of the electric arc furnace is usually made of graphite and is energised in order to produce an electric arc between the electrode and the metallic material or between the electrode and one or more other electrodes. The electric arc furnace can comprise e.g. one electrode of that kind if direct current is used or e.g. three electrodes if alternating current is used.

In order to make electrically non-conducting air inside the furnace conducting, the molecular nitrogen N₂ of the air is dissociated into atomic nitrogen N, which is then ionised. By means of this conducting plasma the electric arc can be generated and can reach temperatures up to several thousand Kelvin such that the metallic material can be melted.

In the scrap melting phase, the metallic charge inside the furnace is usually completely in the solid state. In the course of the melting phase the electric arc burns holes into the metallic feed material, which is melted via the point of impact of the electric arc (lower area) and its radiant energy (to the sides). Thus, maximum energy yield and little losses of energy can be achieved. Once the metallic material is completely melted a flat bath is reached. In the course of a flat bath phase the electric arc is surrounded by a foaming slag in order to minimise energy losses. In the case of stainless steel, a foam slag is not used due to the required chemical analysis.

Operation of an electric arc furnace of that kind typically involves high costs. With rising and varying energy prices, the costs for energising the electrodes can be a significant factor of the economic efficiency of the furnace. Further, wear of the graphite electrodes can also yield high costs and can make it necessary that the electrodes have to be replaced in certain intervals. Wear of the graphite electrodes usually comprises sublimation at the tip of the electrode and burn-off at its sides due to oxidation.

It has therefore been suggested to use an argon-based gas in order to generate an argon-based arc instead of a nitrogen-based arc in order to reduce the electrical energy consumption. In common electric arc furnaces, in order to generate an electric arc, molecular nitrogen N₂ is dissociated into atomic nitrogen N, a reaction for which 9.8eV of energy is needed per nitrogen molecule. The atomic nitrogen N is then ionised, for which 14.5eV of energy per nitrogen atom is necessary. Thus, per nitrogen molecule at least 24.3eV are necessary to create electrically conducting plasma.

In contrast to nitrogen, argon is a one atomic gas, i.e. argon does not have to be dissociated. Thus, atomic argon only has to be ionised in order to create conducting plasma. 15.8eV of energy are necessary to ionise one argon atom, i.e. only 65% of the energy in case of using nitrogen (N₂).

The electrodes can therefore be energised with lower currents in order to create and operate the electric arc. Thus, wear of the electrodes, particularly sublimation at their tips can expediently be reduced. Further, by injecting the argon-rich gas into the furnace, the atmosphere inside the furnace in an area surrounding the at least one electrode is expediently enriched with argon and oxygen is suppressed in this area. Therefore, wear of the electrodes particularly in the form of burn-off at their sides due to oxidation can expediently be reduced. The intervals in which the electrodes need to be replaced can therefore be increased and costs can thus be reduced.

Furthermore, electric resistance of the electric arc is reduced such that the electric arc is created more efficient and more steady, which improves the operation of the furnace and increases its productivity.

Using electrodes, particularly made of graphite, for generating an electric arc in an electric arc furnace, which electrodes comprise a longitudinal bore for supplying argon, has already been suggested in GB 1 572 248 A.

However, due to high argon losses, up to now this technique could not become prevalent. It is thus desirable to improve this type of technique in order to use argon-based electric arcs in electric arc furnaces in practice.

### Disclosure of the invention

The inventor observed high argon losses depending on the porosity of the electrode material and on the diameter of the longitudinal bore, especially in relation to the outer diameter of the electrode. It was found that depending on the porosity and other parameters like the gas pressure and the bore/electrode diameters, around one-third of the gas is lost in a one metre long electrode. The gas is not only lost through the connection of two electrodes - two or more electrodes are usually longitudinally connected to a larger electrode, i.e. an electrode assembly - but also through the electrode body itself. In the first place, it was found that the gas losses can be reduced by reducing the diameter of the longitudinal bore to be at least less than 10% of the diameter of the electrode.

Although reducing the diameter of the bore in relation to the diameter of the electrode helps reducing the loss of argon-rich gas and provides other advantages as discussed below, it still cannot satisfactorily remove such losses. This, however, can largely be accomplished by the present invention, according to which the inner surface of the bore is sealed and/or coated and/or fitted with an inside tube in order to avoid the argon-rich gas from diffusing through the electrode material, particularly through the porous graphite or carbon material.

The present invention leads to a reduction of electricity consumption up to about 15%, to a reduction of electrode consumption up to around 6% and to a production increase by about 2% compared to the corresponding facts in the German steel industry published in 2019. The invention provides a powerful solution to the hitherto existing problems in connection with using particularly graphite electrodes in connection with an argon-rich gas for creating and operating an electric arc in an electric arc furnace.

The electrode is preferably made of graphite or carbon, although other suitable materials may be used such as tungsten. The electrode size is chosen appropriately to accommodate the size and design of the electric arc furnace being used. Typically, a number of electrodes are longitudinally connected to each other to an electrode assembly which serves as the ultimate "electrode". Thus, in this application, the term "electrode" and "electrode assembly" is used interchangeably, unless otherwise indicated. Further, the term "furnace" can also designate the "furnace vessel" in the narrower sense.

The term "argon-rich gas" is particularly to be understood as a gas or a mixture of gases, wherein an amount of argon is larger than the amount of any other gas. In particular, the amount of argon in the argon-rich gas is at least 50%, particularly at least 75%, particularly at least 90%, and particularly at least 95%. Also pure argon can be used as "argon-rich gas". In particular, argon with a purity of at least 90% is injected as the argon-rich gas, particularly with a purity of at least 95%, more particularly with a purity of at least 99%. For example, argon 5.0 can be injected, i.e. argon with purity of 99.999%. Particularly, argon 6.0 can be injected with a purity of 99.9999%. Further, argon 7.0 can be injected, i.e. argon with a purity of 99.99999%.

As already mentioned above, the diameter of the longitudinal bore inside the electrode body is preferably less than 10%, more preferably less than 8%, more preferably less than 6%, more preferably less than 4% and even more preferably less than 2% of the diameter of the electrode. Such dimensioning helps achieve the required gas amounts and gas velocities. In typical applications, the diameter of the bore should be less than 50mm, preferably less than 40mm, preferably less than 30mm and more preferably less than 20mm. For non-circular cross sections of the electrode or of the bore, the term "diameter" shall be understood as the diameter of a circle having the same or essentially the same area as the non-circular cross-sectional area.

Such hollow electrodes are different from classical hollow electrodes. The borehole can not be used for ducting solid particles since they would block the bore. The advantages of the small boreholes are, first, that the argon gas demand is reduced, and, second, that higher pressures can be used. The higher pressure leads to a more exact supply of argon-rich gas in the area of gas consumption, i.e. in the area of the electric arc. The use of an electrode according to the present invention, which is coated or otherwise sealed at the inner surface of the bore, is particularly preferred in combination with the small borehole as described above. The current loss of around 60% of argon-rich gas due to porosity of classical electrodes can effectively be reduced when using the proposed new electrodes.

According to the first aspect of the present invention, the inner surface of the bore is sealed. Such a sealing can be achieved by a high-temperature resistant adhesive or resin. One example of such an adhesive is furan resin on the basis of furfuryl alcohol.

In another preferred embodiment, the inner surface of the bore is sealed by a silica based sealer. Such silica based sealers are used for making concrete watertight.

In yet another preferred embodiment, the inner surface of the bore is sealed by a refractory concrete.

In a preferred embodiment, the step of sealing the inner surface of the bore comprises fixing a closure plate at one end (at the lower end) of the bore and filling a sealing compound through the other end (the upper end) of the bore into the bore to fill the bore with the sealing compound. Depending on the sealing compound, it may need a predetermined time to make the compound fill the pores of the electrode material. Then, the closure plate can be removed to remove remaining sealing compound. Such remaining compound typically flows out of the borehole or can otherwise be removed from the borehole. Electrodes prepared in this way typically have to rest for a period of time, typically one or two days, such that the adhesive can cure.

According to the second aspect of the present invention, the inner surface of the bore is coated. In a preferred embodiment, the inner surface of the bore is coated by a soot layer. Such a soot layer can, for instance, be generated by directing a burner flame creating soot particles towards the inner surface of the bore to create a layer of soot particles on the inner surface of the bore. To this end, a CarboBlack acetylene burner can be used to create a layer of fine soot particles.

In another preferred embodiment, the inner surface of the bore is coated by pressurized graphite dust or particles generated from drilling the bore into the electrode body. This can be achieved by applying a pressure while and/or after drilling the longitudinal bore into the electrode body such that dust and small particles generated by the drilling are forced into the (porous) inner surface of the bore and/or are deposited onto the inner surface of the bore.

According to the third aspect of the present invention, the inner surface of the bore is fitted with an inside tube. In a preferred embodiment, the inside tube is made of steel or another metal or metallic compound, or carbon fiber or graphite. While steel is a comparatively cheap material, it is not as high temperature resistant as carbon fiber tubes or graphite tubes. If graphite tubes are used, a low porosity should be chosen. The inside tube is preferably mounted to the bore, the bore having a slightly increased diameter depending on the wall thickness of the inside tube or glued into the bore by a high-temperature resistant glue.

The inside tube of an electrode according to the present invention can be used to realise a longitudinal plug connection of two or more electrodes, particularly if the tube comprises a hollow stop collar at one of its ends (at its upper/first end) and/or a tapered part at its other end (at its lower/second end). In this embodiment, each electrode is assembled with an inside tube in the drilling borehole before the assembly. On the upper or first side of the inside tube there is a stop collar in the form of e.g. a round plate surrounding the tube or in the form of e.g. some (2 to 4) welding spots giving the inside tube a larger diameter than that of the drilled bore. This stop collar prevents the tube from slipping through the longitudinal bore inside the electrode. In order to longitudinally connect such an electrode with another electrode having another inside tube, each tube is preferably tapered at its lower end (or second end). By placing the tapered end of the tube of one electrode into the hollow stop collar of the tube of another electrode, an electrode assembly can be configured. In practice, typically three electrodes are assembled to an electrode assembly of about 2.0m length and a diameter of about 0.6m.

While one such electrode assembly is typically used for a DC electric arc furnace, three such electrode assemblies are typically used in an AC electric arc furnace. Such electrode assemblies are used in the form of an electrode unit further comprising the required electric elements like cables, a transformer, a power source etc.

In another preferred embodiment, the electrode according to the present invention further comprises a lifting plug at one of its ends (at its upper end) for transportation of the electrode, the lifting plug comprising a connector, especially a quick connector connected to the bore of the electrode for connecting a gas supply to the (quick) connector for supplying the argon-rich gas through the bore. Lifting plugs are used to transport an electrode, for example to assemble an electrode onto another electrode in the form of an electrode column/assembly. The lifting plug can be screwed into the electrode and also serves as a dust protection for the thread of the electrode during production. A gas supply connection with a (quick) coupling is installed in the lifting plug such that argon-rich gas can be lead from an external source through the gas supply connection into the bore of the electrode.

The advantage of such a system is that the argon-rich gas injector can already be installed outside the furnace. When an employee removes the crane hook from the lifting plug, the gas hose can easily be connected to the quick coupling. This means only very little additional time is required for connecting the gas supply.

Further advantages and embodiments of the invention will become apparent from the description and the appended figures.

It should be noted that the previously mentioned features and the features described below are usable not only in the indicated combinations but also in other combinations or even taken alone, without departing from the scope of the present invention as defined in the appended claims.

### Short description of the figures

In the drawings
- Fig. 1: schematically shows a preferred embodiment of an electric arc furnace according to the present invention in a sectional side view,
- Fig. 2: schematically shows a preferred embodiment of an electrode assembly comprising two or more electrodes according to the present invention, fitted with an inside tube,
- Fig. 3: schematically shows a preferred embodiment of a method of manufacturing an electrode according to the present invention having a longitudinal bore with a sealed inner surface,
- Fig. 4: schematically shows a preferred embodiment of an electrode assembly according to the present invention having an electrode comprising a lifting plug having a quick connector for connecting a gas supply, and
- Fig. 5: schematically shows a preferred embodiment of the lifting plug as used in the embodiment of Figure 4.

### Detailed description of the figures

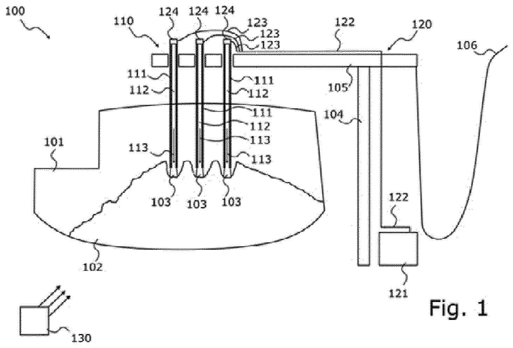

Fig. 1 schematically shows a preferred embodiment of an electric arc furnace 100 according to the present invention in a sectional side view.

The furnace 100 comprises a main body 101 in which a metallic material 102 to be processed can be loaded, e.g. metal scrap. Further, the furnace 100 comprises an electrode unit 110 with at least one electrode 111. In the present example, the electrode unit 110 comprises three electrodes 111 or electrode assemblies each comprising two or more (typically three) electrodes 111, particularly of (nearly) identical construction. A mechanical holding element is provided for holding the electrodes 111 in position comprising a lift column 104 and a support arm 105. The support arm 105 can further be used to energise the electrodes 111. For this purpose the support arm 105 can be connected with a high current cable 106. This cable 106 can be connected with further electric elements e.g. with a transformer and a power source, particularly a three-phase electric power source.

When the electrodes 111 are energised, electric arcs 103 can be created between the electrodes 111 and the metallic material 102. These electric arcs 103 can reach temperatures of several thousand Kelvin such that the metallic material 102 can be melted. Fig. 1 exemplarily shows a melting phase, during which most of the metallic material 102 is still in a solid state and in the course of which the electric arcs 103 drill holes into the solid metallic material 102.

Further, an injection unit is provided in order to inject an argon-rich gas into the furnace 100. This injection unit is partially integrated into the electrode unit 110 in that each electrode 111 comprises a bore 112. Each electrode 111 has a cylindrical shape with the bore 112 extending along the entire length of the electrode 111 in axial direction.

Each bore 112 is connected with a gas supply 120 for supplying the argon-rich gas. This gas supply 120 can comprise a corresponding gas tank 121 and a common pipe 122, which can e.g. be arranged at the lift column 104 and the support arm 105. From the common pipe 122 three individual pipes 123 branch off to the three electrodes 111. Although only one tank is exemplarily shown in Fig. 1 it is to be understood that an expedient number of tanks can be provided. For example, also a bundle of gas cylinders can be provided as the gas tank 121.

Particularly, each individual pipe 123 is connected with a cover 124, which is connected to the corresponding electrode 111 such that the argon-rich gas can be conducted into the bore 112 of the corresponding electrode 111, as indicated by reference sign 113.

Thus, the argon-rich gas 113 is injected into the furnace 100 through the electrodes 111 itself. When ejected out of the bores 112, argon-rich gas 113 is therefore injected into the furnace 100 at location at the tip of the electrodes 111.

Preferably, argon is injected as the argon-rich gas 113, preferably argon with a purity of at least 99.9%, e.g. argon 7.0 with a purity of 99.99999%. Argon is therefore injected into the furnace 100 in the area between the electrodes 111 and the metallic material 102, in which the electric arcs 103 shall be created. This area is thus enriched and particularly filled with argon. When the electrodes 111 are energised the argon in this area is thus ionised and an electrically conducting plasma is created such that the electric arcs 103 can be ignited.

Since argon is a one atomic gas it does not need to be dissociated. Argon thus only has to be ionised in order to create conducting plasma. For the ionisation of argon 15.8eV of energy are necessary. In contrast to that, in a common electric arc furnace, into which no argon is injected, molecular nitrogen N₂ of air is usually ionised in order create plasma. However, first of all the molecular nitrogen N₂ has to be dissociated into atomic nitrogen N, which is afterwards ionised. For this dissociation 9.8eV of energy is needed and for the ionisation 14.5eV of energy is needed. Thus, in a common electric arc furnace, at least 24.3eV per molecule are necessary to create an electrically conducting plasma.

Therefore, in the present electric arc furnace 100 a smaller amount of energy has to be provided in order to create plasma compared to common electric arc furnaces into which no argon is injected. Electric energy to generate and operate the electric arcs 103, costs for energising the electrodes 111 and for operating the furnace 100 are reduced compared to common electric arc furnaces.

Further, since the electrodes 111 can therefore be energised with lower currents in order to create and operate the electric arcs 103, wear of the electrodes 111, particularly sublimation at their tips can expediently be reduced. Since the atmosphere inside the furnace 100 in an area surrounding the electrodes 111 is enriched with argon and oxygen is suppressed in this area, wear of the electrodes 111 in the form of burn-off at their sides due to oxidation can be reduced. Furthermore, since electric resistance of the electric arcs 103 is reduced the arcs 103 can be created and operated more efficient and steadier.

The diameter of the longitudinal bores 112 inside the electrode bodies is less than 10%, preferably around 4 to 6% of the diameter of the electrode 111. This helps achieve the required gas amounts and gas velocities. In this embodiment, the diameter of the bore should be less than 100mm, preferably around 30 to 50mm.

By means of the present invention, operation of the furnace 100 can therefore be improved, its productivity can be increased and costs can be reduced.

In order to further improve operation and productivity, the amount of the argon-rich gas injected into the furnace is preferably controlled. For this purpose, a control unit 130 of the furnace is, in particular in terms of a computer program, configured to perform operation of the electric arc furnace.

In a frist step the metallic scrap is loaded into the furnace 100. In a next step, the injection unit is activated and argon 113 is injected into the furnace. In a next step, the electrodes/electrode assemblies 111 are energised such that the plasma is created and that the electric arcs 103 are ignited.

After the electric arcs 103 are generated, the amount of argon 113 injected into the furnace 100 is controlled in a next step, particularly in dependence of a state of the furnace 100 and in dependence of a state of electric arcs 103.

For example, if the electric arcs 103 become unstable, the amount of injected argon 113 will be increased to support and stabilise the electric arcs 103. The electric arcs 103 can thus be created and operated efficiently and steadily, thus further improving the operation of the furnace 100 and increasing its productivity.

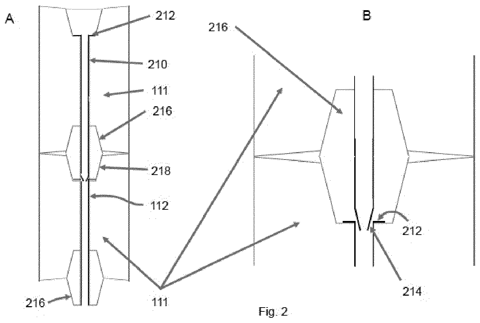

Figure 2 shows an embodiment of an electrode assembly comprising two electrodes 111 longitudinally connected to each other (Figure 2A), and a detailed view of the connecting area 218 of the two electrodes 111 (Figure 2B). Each of the electrodes 111 comprises a nipple or connecting pin 216 at one end, and a corresponding thread at the other end, such that a screwing connection between two electrodes 111 can be established. Other kinds of electrode assemblies are possible and known. Among others, the electrode robot should be mentioned. The injection of argon-rich gas can be adapted accordingly.

Each of the electrodes 111 comprise an inside tube 210 according to the third aspect of the present invention. Each inside tube 210 comprises a stop collar 212 (also in the form of welding spots as discussed above) resting on the inlet of the bore 112 of an electrode 111. Further, each inside tube 210 comprises a tapered part 214 at its lower end. Each electrode is assembled with such an inside tube 210 which is preferably made of steel and mounted in the drilling hole or bore 112 before the electrodes 111 are assembled to the ultimate electrode or electrode assembly. As can be seen from Figure 2A the stop collar 212 prevents the tube 210 from slipping through the bore 112 of the electrode 111. Each tube 210 is tapered at its lower end to enable a plug connection between the tubes 210 of different electrodes 111. The connecting area 218 is shown in more detail in Figure 2B. As can be seen from Figure 2B, if a new electrode 111 is set up, the tube 210 is placed through the hollow stop collar 212 of the next tube 210 of the next electrode 111. A small distance between the tapered part 214 of the first tube 210 and the inlet part of the next tube is desired since thermal expansion of the tube part 214 (and the tube in general) must be considered.

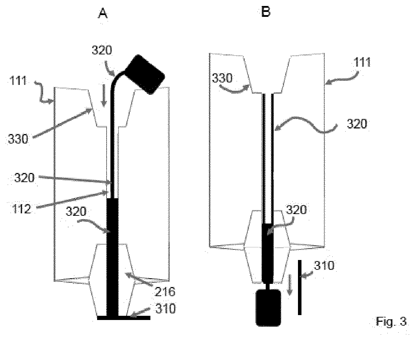

Figure 3 schematically shows a method of manufacturing an electrode 111 according to the first aspect of the present invention. After the step of drilling a longitudinal bore 112 into the electrode body, the inner surface of the bore 112 is sealed. As can be seen from Figure 3A, a high-temperature resistant adhesive is filled from a container into the upper part of the bore 112 of the electrode 111. A closure plate 310 is fixed to the bottom of the electrode 111. As shown in Figure 3A, the adhesive is filling up the borehole 112, which is filled into the bore up to its inlet part. After the borehole 112 has been filled with the adhesive 320, a defined time must be waited so that the adhesive 320 can fill the pores of the porous inner surface of the bore 112.

Afterwards, as shown in Figure 3B, the closure plate 310 is removed and the remaining adhesive 320, which is not consumed by the inner surface of the bore 112, flows out of the borehole 112 back into another container. A part of the adhesive 320 is deposited onto the inner surface of the bore 112, thus sealing its porous surface.

Electrodes 111 prepared in this way will typically need about 48 hours to make the adhesive 320 cure inside the bore 112.

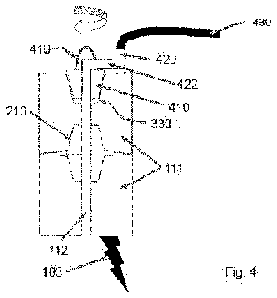

Figure 4 schematically shows another embodiment of an electrode assembly having one electrode 111 comprising a lifting plug 410. The lifting plug 410 is typically used for lifting the electrode 111 or the electrode assembly for transportation purposes or for exchanging a worn electrode 111 against a new electrode 111. The lifting plug 410 is screwed into a corresponding thread 330 (see Figure 3) of the electrode 111. The lifting plug 410 is typically made of graphite and/or steel. According to the present embodiment, the lifting plug 410 further comprises a steel pipe or tube 422 which connects with the bore 112 of the electrode 111. At its other side, the steel pipe or tube 422 connects to a gas supply 430, for instance, in the form of a gas hose. To this end, a quick connector 420 is provided which is preferably be arranged at the periphery of the top side of the electrode 111. With this arrangement, the lifting sling of the lifting plug 410 can be used as normal. At the electric arc furnace 100, the quick connector 420 can easily be linked to the argon gas supply line 430.

Again, the nipple of the electrode 411 is designated 216. In operation, the electrode assembly as shown in Figure 4 is used for generating an electric arc 103 as shown in Figure 4.

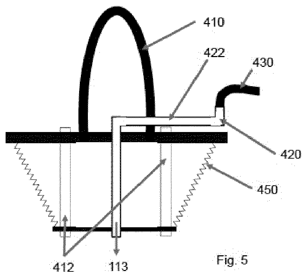

Figure 5 shows a more detailed view of the lifting plug construction of the embodiment of Figure 4. Again, the lifting plug is designated 410, the gas supply line or hose 430, and the (steel) pipe or tube 422. As can be seen in more detail from Figure 5, the lifting plug 410 comprises a thread 450 to be screwed into the corresponding thread 330 in the upper part of an electrode 111 (see for example Figure 3). The crane mounting part of the lifting plug 410 is fixed to its lower part by screws 412.

For manufacturing a lifting plug according to the present embodiment, a hole has to be drilled into its centre to provide access for the steel pipe 422. This steel pipe 422 is bent and leads to the periphery of the lifting plug 410. At the end of the pipe 422 a quick connector 420 is installed.

Using a lifting plug 410 as shown, the lifting plug 410 can remain in the electrode 111 during operation of the electric arc furnace. The argon injector can also already be installed outside the furnace such that, after having removed the crane hook from the lift plug, a user can easily connect the gas hose 430 to the quick connector 420. This takes only a few seconds in addition to the normal assembling time of the electrode assembly.

### Reference list

- 100: electric arc furnace
- 101: main body of the electric arc furnace
- 102: metallic material, metal scrap
- 103: electric arc
- 104: lift column
- 105: support arm
- 106: high current cable
- 110: electrode unit
- 111: electrode
- 112: bore
- 113: argon-rich gas
- 120: gas supply
- 121: gas tank
- 122: common pipe
- 123: individual pipe
- 124: cover
- 130: control unit
- 210: inside tube
- 212: stop collar
- 214: tapered part
- 216: connecting pin, nipple
- 218: connecting area
- 310: closure plate
- 320: sealing compound, adhesive
- 330: thread
- 410: lifting plug
- 412: screw
- 420: quick connector
- 422: steel pipe/tube
- 430: gas supply, hose
- 450: thread

## Claims

1. An electrode (111) for generating an electric arc (103), said electrode (111) having a longitudinal bore (112) inside the electrode body for supplying an argon-rich gas (113) through the bore (112), wherein the inner surface of the bore (112) is sealed and/or coated and/or fitted with an inside tube (210).

2. The electrode of claim 1, wherein the inner surface of the bore is sealed by a high-temperature resistant adhesive or resin or by a silica based sealer.

3. The electrode of any one of the preceding claims, wherein the inner surface of the bore is sealed by a refractory concrete.

4. The electrode of any one of the preceding claims, wherein the inner surface of the bore is coated by a soot layer.

5. The electrode of any one of the preceding claims, wherein the inner surface of the bore is coated by pressurized graphite particles generated from drilling the bore (112) into the electrode body.

6. The electrode of any one of the preceding claims, wherein the inner surface of the bore is fitted with an inside tube (210) made of steel or carbon fiber or graphite, the inside tube (210) being mounted to or glued in the bore (112).

7. The electrode of any one of the preceding claims, wherein the inner surface of the bore is fitted with an inside tube (210), the tube (210) having a stop collar (212) at one of its ends and/or a tapered part (214) at its other end.

8. The electrode of any one of the preceding claims, wherein the electrode (111) further comprises a lifting plug (410) at one of its ends for lifting of the electrode (111), the lifting plug comprising a connector or quick connector (420) connected to the bore (112) of the electrode (111) for connecting a gas supply (430) to the connector or quick connector (420) for supplying the argon-rich gas (113) through the bore (112).

9. The electrode of any one of the preceding claims, wherein the diameter of the longitudinal bore (112) inside the electrode body is less than 10%, or less than 8%, or less than 6%, or less than 4%, or less than 2% of the diameter of the electrode (111).

10. An electric arc furnace for melting metal, comprising the electrode of any of the preceding claims.

11. A method of manufacturing an electrode (111) for generating an electric arc (103), comprising the steps of providing the electrode (111) having a longitudinal bore (112) inside the electrode body for supplying an argon-rich gas through the bore (112), and sealing and/or coating the inner surface of the bore (112), and/or fitting an inside tube within the bore (112).

12. The method of claim 11, wherein the step of providing the electrode having a longitudinal bore inside the electrode body comprises drilling the longitudinal bore (112) into the electrode body, and wherein the step of sealing the inner surface of the bore comprises fixing a closure plate (310) at one end of the bore and filling a sealing compound (320) through the other end of the electrode into the bore to fill the bore with the sealing compound, and removing the closure plate to remove remaining sealing compound.

13. The method of claim 11, wherein the step of providing an electrode having a longitudinal bore inside the electrode body comprises drilling the longitudinal bore into the electrode body, and wherein the step of coating the inner surface of the bore comprises applying a pressure while and/or after drilling such that dust and/or particles generated by the drilling are forced into and/or deposited onto the inner surface of the bore.

14. The method of claim 11, wherein the step of coating the inner surface of the bore comprises directing a burner flame creating soot particles towards the inner surface of the bore to create a layer of soot particles.

15. The method of claim 11, wherein the step of fitting an inside tube into the bore comprises glueing or mounting the inside tube, particularly made of steel or carbon fiber or graphite, inside the bore (112).
